# EUROPÄISCHE PATENTSCHRIFT

(11) **EP 0 970 369 B1**
(45) Veröffentlichungstag und Bekanntmachung des Hinweises auf die Patenterteilung: **12.09.2001**
(21) Anmeldenummer: 98917026.1
(22) Anmeldetag: 20.03.1998
(51) Int. Cl.: G01N 22/04, B01J 8/24, B01J 2/16, B01D 1/18, B01D 1/00

(54) **VERFAHREN ZUM ÜBERWACHEN UND/ODER STEUERN UND REGELN EINES GRANULATIONS-, AGGLOMERATIONS-, INSTANTISIERUNGS-, COATING- UND TROCKNUNGSPROZESSES IN EINER WIRBELSCHICHT ODER EINER BEWEGTEN SCHÜTTUNG DURCH BESTIMMUNG DER PRODUKTFEUCHTE SOWIE LUFTTECHNISCHER APPARAT ZUR DURCHFÜHRUNG DES VERFAHRENS**
METHOD FOR MONITORING AND/OR CONTROLLING AND REGULATING A GRANULATION, AGGLOMERATION, INSTANTIZATION, COATING AND DRYING PROCESS IN A FLUIDIZED LAYER OR A FLUIDIZED BED BY DETERMINING PRODUCT MOISTURE, AND DEVICE FOR CARRYING OUT SAID METHOD
PROCEDE POUR CONTROLER ET/OU COMMANDER ET REGULER UN PROCESSUS DE GRANULATION, D'AGGLOMERATION, D'INSTANTANEISATION, DE REVETEMENT ET DE SECHAGE DANS UNE COUCHE FLUIDISEE OU UN LIT FLUIDISE PAR DETERMINATION DE L'HUMIDITE DU PRODUIT ET APPAREIL AERAULIQUE POUR METTRE LEDIT PROCEDE EN OEUVRE

(30) Priorität: 27.03.1997 DE 29705574 U; 06.06.1997 DE 19723995
(43) Veröffentlichungstag der Anmeldung: 12.01.2000
(73) Patentinhaber: GLATT GMBH, 79589 Binzen (DE)
(72) Erfinder: TONDAR, Mathias, D-79688 Hausen (DE); LUY, Bernhard, D-79102 Freiburg (DE); PRASCH, Armin, D-79100 Freiburg (DE)
(74) Vertreter: Patent- und Rechtsanwaltssozietät, Maucher, Börjes & Kollegen
(86) Internationale Anmeldenummer: EP9801629
(87) Internationale Veröffentlichungsnummer: WO9844341

(56) Entgegenhaltungen:
- EP-A- 0 403 820
- DE-A- 4 428 978
- HAUSCHILD T ET AL: "DENSITY MONITORING IN CIRCULATING FLUIDIZED BEDS USING A MICROWAVE SENSOR" PROCEEDINGS OF THE 23RD. EUROPEAN MICROWAVE CONFERENCE, MADRID, SEPT. 6 - 9, 1993, 6.September 1993, EUROPEAN MICROWAVE CONFERENCE MANAGEMENT COMMITTEE, Seiten 260-262, XP000629927

## Beschreibung

Die Erfindung bezieht sich auf ein Verfahren und eine Vorrichtung zum Überwachen und/oder Steuern und Regeln eines Granulations-, Agglomerations-, Instantisierungs-, Coating- und Trocknungsprozesses in einer Wirbelschicht oder einer bewegten Schüttung durch Bestimmung der Produktfeuchte.

Zum Stand der Technik sind indirekte Verfahren zur Bestimmung der Produktfeuchte, beispielsweise über eine Bilanzierung der Ein- und Ausgangsströme bekannt, woraus die Produktfeuchte ermittelt wird. Gemessen werden die Zu- und Abluftbedingungen (Temperatur und Feuchte) sowie der Volumenstrom der Zu- und Abluft und die Sprührate. Aus vielen verschiedenen Meßstellen (Minimum sieben Meßgrößen) resultiert eine entsprechend große Anzahl an Meßfehlern und dadurch eine nicht exakt zu bestimmende Produktfeuchte. Probleme ergeben sich insbesondere bei Prozessen die eine schnelle Regelung erfordern, beispielsweise die Erfassung des Abschaltpunktes für das Sprühen beim Granulieren. Eine indirekte Messung der Produktumgebungsfeuchte kann durch einen kapazitiv messenden Fühler der direkt im Wirbelbett positioniert ist, erfolgen. In der Regel ist der eigentliche Meßfühler mit einer wasserdampfdurchlässigen Schutzkappe umgeben, durch die der Wasserdampf diffundieren muß, der dann entsprechend vom Fühler detektiert wird.

Problematisch ist hierbei, das es sich dabei um ein träges Meßverfahren handelt. Beim Granulieren wird sich in der Produktumgebung stets eine nahezu mit Wasser gesättigte Luftatmosphäre einstellen, die am Sensor zu Kondensation führen kann (sog. Überfeuchten des Fühlers). Das kondensierte Wasser braucht wesentlich länger, bis es über die Schutzkappe wieder nach außen abgegeben wird. Während dieser Zeit liegt das Meßsignal stets bei 100 % Luftfeuchtigkeit.

Weiterhin können Verschmutzungen des Sensors zu erheblichen Fehlmessung führen. Außerdem ist infolge der teilweise stark abrasiven Kräfte durch das fluidisierte Produkt eine nur geringe Standzeit des Sensor vorhanden.

Mit Hilfe der NIR-Spektroskopie kann nur die Oberflächenfeuchte gemessen werden. Es ist hierbei in der Regel ein sehr hoher Kalibieraufwand und eine aufwendige mathematische Auswertung und Mittelung des Meßsignals erforderlich.

Der IR-Sensor kann in der Wirbelschicht nur über ein wandbündiges Fenster integriert werden, so daß sich Probleme durch Zusetzen des Fensters ergeben, weil dies zur sofortigen Reflexion der Strahlung führt. Eine Messung ist dann ausgeschlossen.

Weiterhin ist durch die kurze Wellenlänge und die dadurch vorhandene, hohe Reflexion der Strahlung keine Eindringtiefe in die Wirbelschicht beziehungsweise das Produkt vorhanden. Es kann also nur die Oberflächenfeuchte erfaßt werden.

Schließlich sind noch die Abhängigkeit des Meßsignals von der Korngröße und von der Schüttdichte und die Abhängigkeit des Meßsignals vom Farbwechsel und der daraus resultierende hohe Kalibrieraufwand nachteilig.

Eine Feuchtemessung kann auch über eine Impedanzmessung mit zwei Elektroden auf elektrisch isolierenden Substrat (PTFE), die über eine feuchteempfindliche Schicht eines elektrolytischen Festkörpers (Wasserdampf durchlässig) elektrisch leitend miteinander verbunden sind, erfolgen. Gemessen wird eine Gleichgewichtsfeuchte, die sich in der Produktumgebung einstellt. Die direkte Produktfeuchte wird nicht gemessen. Die Standzeit des Sensors in der Wirbelschicht ist sehr unbefriedigend.

Weiterhin ist es bekannt, die Größen Zu- und Ablufttemperatur, Volumenstrom, Zu- und Abluftfeuchte und die Sprührate zu erfassen. Über diese Größen sind in der Regel jedoch nur indirekte Informationen über das tatsächliche Produkt bzw. den sich im Produkt einstellenden Wassergehalt zu erwarten.

Sichere Aussagen sind in der Regel nur mit Offline-Meßverfahren wie Trockengewichtsbestimmung, Vakuum-Trockenschrank, Exsikkatormethode, Infrarotwaage oder durch die Karl-Fischer-Titration möglich.

Diese Verfahren sind jedoch sehr zeitaufwendig und erfordern für eine Feuchtebestimmung einen Zeitaufwand von 10 min bis zu einem halben Tag, so daß diese Methoden keine prozeßbegleitenden Aussagen ermöglichen.

Eine weitere Möglichkeit das Ergebnis bzw. den Verlauf eines Granulationsprozesses zu erfassen, stellt die Möglichkeit dar, die Partikelgröße bzw. die Korngrößenverteilung während eines Prozesses direkt zu bestimmen bzw. zu messen.

Die dafür bekannten Verfahren, wie Ultraschallmessung oder Laser-Beugungs-Spektroskopie, sind gekennzeichnet durch einen sehr hohen apparativen Aufwand und durch äußerst komplizierte mathematische und statistische Auswerteverfahren.

Für die Messung sind in der Regel definierte Meßstrecken, z.B. ein definierter Bypass für das Produkt erforderlich, wodurch ein Einsatz direkt in der Wirbelschicht nicht möglich ist.

Eine Reproduzierbarkeit des Verfahrens ist in der Regel nur bedingt gegeben.

Bei allen bekannten Verfahren zum Steuern beziehungsweise Regeln der eingangs erwähnten Prozesse ist nachteilig, daß sie entweder zu träge und/oder zu störanfällig und/oder nicht genau genug sind und daher nur für bestimmte Produkte eine begrenzte Praxistauglichkeit vorhanden ist.

Aufgabe der vorliegenden Erfindung ist es, ein Verfahren der eingangs erwähnten Art sowie eine Vorrichtung zu schaffen, wobei zuverlässig unter den bei solchen Prozessen herrschenden, erschwerten Bedingungen insbesondere hinsichtlich der Zugänglichkeit des Produkts, der Verschmutzung und der Standzeit des Sensors und dergleichen, mit hoher Meßgenauigkeit die Produktfeuchte gemessen und diese Meßgröße zum Steuern beziehungsweise Regeln des Prozesses verwendbar ist. Insbesondere soll diese Feuchtemessung ein Ergebnis liefern, daß direkt als Maß für bestimmte Produkteigenschaften verwendbar ist.

Außerdem soll die Messung auch für unterschiedliche Produkte ohne aufwendige Anpassung und Kalibrierung anwendbar sein.

Zur Lösung dieser Aufgabe wird vorgeschlagen, daß zumindest während eines Prozeßabschnittes die Produktgesamtfeuchte weitgehend kontinuierlich zumindest im Sekundenbereich, berührungslos mittels elektromagnetischer Strahlung im Hochfrequenz- oder Mikrowellenbereich durch Auswertung der Dämpfung als Maß für diese Produktgesamtfeuchte gemessen und unter Berücksichtigung der Produkttemperatur über einen Regelkreis durch Verändern der Sprührate und/oder der Gastemperatur und/oder des Volumenstromes in einem vorgebbaren Bereich gehalten wird.

Der Erfindung liegt die Erkenntnis zugrunde, daß die Produktgesamtfeuchte und damit sowohl die Oberflächenfeuchte als auch die Feuchte, die im Produktinneren in den Kapillaren oder den Hohlräumen eines Granulatkorns vorliegt, eine Schlüsselinformation ist, über die eine exakte Beeinflussung des jeweiligen Prozesses möglich ist.

Aus der EP-A-0 403 820 ist zwar ein Verfahren zur Trocknung einer Schüttung bekannt, in der eine elektromagnetische Strahlung eingesetzt wird, um die Schüttung zu trocknen und deren Feuchte zu messen. Die elektromagnetische Strahlung wird dabei für die Trocknung der Schüttung eingesetzt, wobei die Mikrowelleneinrichtung als aktive Trocknungseinrichtung dient, während die reflektierte Leistung nur gemessen wird, um das Ende des Trocknungsprozesses festzustellen. Es ist aber kein Hinweis enthalten, daß die elektromagnetische Strahlung nur zum Messen eingesetzt wird und daß diese Messung zur Regelung der Produktgesamtfeuchte durch Verstellen der Sprührate benutzt wird.

Das erfindungsgemäße Verfahren bzw. die entsprechende Meßeinrichtung bilden eine Ergänzung eines konventionellen Prozesses, bei dem die Trocknung nicht durch die Mikrowellenstrahlung beeinflußt wird, so daß Meßdaten über die tatsächlich gerade vorhandene Produktgesamtfeuchte zur Verfügung, die somit unmittelbar als prozeßbegleitende Meßgröße zur Regelung des gerade ablaufenden Prozesses, also "online", verwendet werden können.

Die erfindungsgemäße Einrichtung ermöglicht es, die Produktfeuchte innerhalb sehr enger Grenzen genau und reproduzierbar zu messen. Durch das kontinuierliche on-line Erfassen der Produktfeuchte erhält man zum Beispiel bei einem Granulationsprozeß eine reproduzierbare Korngrößenverteilung, wobei die Produktgesamtfeuchte praktisch ein direktes Maß für die Korngrößenverteilung ist.

Nachfolgende Ausführungen verdeutlichen die Zusammenhänge zwischen Produktgesamtfeuchte und bestimmten Produkteigenschaften.

Über die Grenzflächenkräfte und den Kapillardruck an frei beweglichen Flüssigkeitsoberflächen besteht zwischen den Produkt-Körnern der erforderliche Zusammenhalt für die Granulatbildung aus mehreren Körnern. Dabei muß unterschieden werden, ob die Hohlräume zwischen einzelnen Körnern nur teilweise (Ausbildung von Flüssigkeitsbrücken zwischen den Körnern) oder vollständig mit Flüssigkeit ausgefüllt sind (Ausbildung kapillarer Haftkräfte). Ebenso können mehrere Feststoffkörner mit einer vollständigen Flüssigkeitshaut umgeben sein, wodurch Oberflächenspannungskräfte zu einer Anlagerung mehrerer Tropfen führen können. Als Folge dieser Mechanismen entsteht beim Feuchtgranulieren sowohl eine definierte Kornvergrößerung als auch eine definierte Zerkleinerung bereits entstandener Granulate. Neben produktspezifischen Eigenschaften, wie zum Beispiel Benetzbarkeit, Porosität und Hygroskopizität, geht ein wesentlicher Einfluß auf die Granulation vom absoluten Gehalt an Produktfeuchte aus. Die Produktfeuchte ergibt sich infolge der eingestellten Sprührate und der Trocknungsleistung im Verlauf der Granulation. (Zwischen der Partikelgröße, der Sprührate und dem Partikel-(Korn).

Für das Größenwachstum und damit auch für die Korngrößenverteilung der Granulation, besteht für eine Feuchtgranulation im wesentlichen über die zum Austausch zur Verfügung stehende Partikeloberfläche folgender funktionaler Zusammenhang:

Die Granulation erfolgt durch Anhaften von noch nicht oder weniger stark granulierten Partikeln an der noch feuchten Partikeloberfläche anderer meist größerer Partikel.

Je größer die volumenbezogene Partikeloberfläche (d.h. je kleiner die Partikel) desto größer die Trocknungsleistung. Je größer die Partikel, desto geringer die volumenbezogene Partikeloberfläche und desto kleiner wird die Trocknungsleistung. Gegen Ende der Granulation kommt es bei konstanter Sprührate dadurch leicht zu einer Überfeuchtung des Produkts, was zu unkontrollierter Agglomeration und Prozeßabbruch führen kann. Die Produktgesamtfeuchte stellt damit einen wesentlichen Parameter zum Steuern und Regeln eines Granulationsprozesses dar. Aufgrund des dargestellten Zusammenhangs resultiert ein reproduzierbarer Granulationsmechanismus. Die Produktfeuchte ist demnach ein direktes Maß. Das produktbezogene Ergebnis kann über die Korngrößenverteilung charakterisiert werden.

Es besteht auch die Möglichkeit, daß über die Messung der Produktgesamtfeuchte bei einem Granulierungs-/Coating-Prozeß die maximal zulässige Produktfeuchte für das Aufrechterhalten einer stabilen und homogenen Verwirbelung, und/oder eine vorgebbare, konstante Produktgesamtfeuchte geregelt und/oder der Granulationsendpunkt bestimmt wird.

Weiterhin besteht die Möglichkeit, daß über die Messung der Produktgesamtfeuchte bei einem Trocknungsprozeß das Prozeßende beim Trocknen auf einen gewünschten Endfeuchtegehalt bestimmt wird. Diese Möglichkeit ist insbesondere dann anwendbar, wenn die Trocknung die letzte Phase eines Granulationsprozesses zum Erreichen einer vorgegebenen Endfeuchte darstellt.

Schließlich kann durch die Messung der Produktgesamtfeuchte ein vorbestimmbarer Feuchteverlauf über eine direkte Korrelation von Sprührate und Produktfeuchte geregelt werden.

Besondere Vorteile ergeben sich auch beim Einsatz im Rahmen des sogenannten "Scale-up". Dabei wird bei einer Kalibrierung im Rahmen eines im Labormaßstab eingestellten Prozesses und darauf basierender Anpassung des Verfahrens auf einen tatsächlichen Produktionsmaßstab, die Einstellung der Sprührate ausschließlich über die Messung der Produktgesamtfeuchte als apparateunabhängige Größe vorgenommen.

Insbesondere bei diesem Scale-up steht mit der mittels elektromagnetischer Strahlung gemessenen Produktgesamtfeuchte eine apparate-unabhängige Größe zur Verfügung, die als Maß die Übertragungung der Prozeßbedingungen vom Kleinmaßstab zum Großmaßstab ermöglicht.

Die Erfindung betrifft auch einen lufttechnischer Apparat, insbesondere eine Wirbelschichtapparatur mit einem Behälter und einem Dichtverschluß, der ein in eine Behälterwand-Öffnung einsetzbares Verschlußteil aufweist, wobei zur Prozeßsteuerung ein Regelkreis zumindest mit einem Temperatursensor sowie Mitteln zur Änderung der Sprührate und/oder der Gastemperatur und/oder des Volumenstromes vorgesehen ist.

Dieser Apparat ist dadurch gekennzeichnet, daß in den Dichtverschluß ein Mikrowellensensor als Feuchtesensor integriert ist, der über elektrische Kabel mit einer Auswerteeinrichtung als Teil der Prozeßsteuerung verbunden ist, daß der Dichtverschluß einen durch einen Trägerkörper gebildeten Sensorhalter aufweist und daß der Trägerkörper oder der Feuchtesensor für einen totraumfreien Abschluß zu der Behälterwand etwa Innenwand-bündig angeordnet ist.

Mit einem solchen lufttechnischen Apparat läßt sich das Verfahren besonders gut durchführen, weil bei Verwendung eines Mikrowellensensors unter anderem spezielle Probennahmevorrichtungen mit direktem Eingriff in das Wirbelbett oder Abdeckungen nicht erforderlich sind.

Der Einsatz des Mikrowellensensors in Verbindung mit dem Dichtverschluß in totraumfreier Anordnung hat den wesentlichen Vorteil, daß die Anlage und die eingesetzten Komponenten-Dichtverschlüsse, Sensoren - leicht reinigbar sind, was auch in geschlossen Zustand der Anlage möglich ist.

In Verbindung mit dem vorgesehenen Dichtverschluß läßt sich der Sensor auf einfache Weise nachträglich noch nachrüsten.

Zweckmäßigerweise weist der Trägerkörper eine Höhlung zur Aufnahme des Mikrowellensensor auf und ist vorzugsweise als mit der Behälter-Innenwand etwa bündig abschließende Schutzkappe für den Sensor ausgebildet, die vorzugsweise aus Polytetrafluoräthylen (PTFE) besteht.

Der Sensor ist dadurch gut geschützt untergebracht und durch den bündig mit der Behälterinnenseite abschließenden Trägerkörper wird die Behälterinnenwand praktisch kontinuierlich fortgeführt, ohne daß störende Teile ins Behälterinnere ragen.

Um den Mikrowellensensor bedarfsweise leicht auswechseln zu können, ist ein lösbarer Deckflansch zum lösbaren Halten des Mikrowellensensors vorgesehen.

Der Sensor, der zum Beispiel als Planarsensors ausgebildet sein kann, läßt sich wandbündig in der Behälterwand in gleicher Weise wie ein Bullauge montieren.

Zweckmäßigerweise ist der Mikrowellensensor, bezogen auf eine vorgegebene Ruhebett-Schütthöhe des jeweiligen Produktes innerhalb des Behälters, in einer Höhe von etwa bis zum Zweifachen der Ruhebett-Schütthöhe, vorzugsweise am oberen Randbereich des Ruhebettes innerhalb von dessen Ruhebett-Schütthöhe, angeordnet.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: eine Seitenansicht einer Wirbelschichtapparatur mit einem Dichtverschluß sowie einem Mikrowellensensor und
- Fig.2: eine Schnittdarstellung der Behälterwand entsprechend dem Bereich "X" in Figur 1, mit einem Dichtverschluß und einem Sensor.

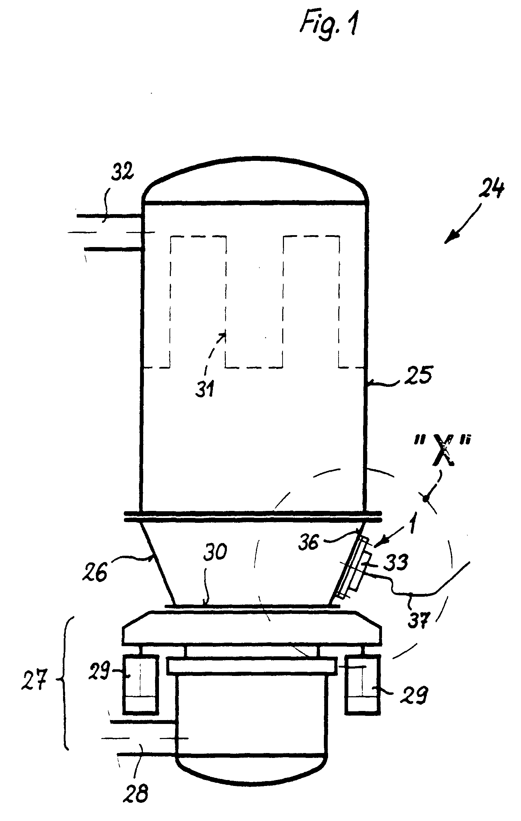

Fig. 1 zeigt als lufttechnischen Apparat eine Wirbelschichtapparatur 24, bestehend im wesentlichen aus einem Oberteil mit einem Filtergehäuse 25 sowie einem Materialbehälter 26 und einem Unterteil 27, bei dem sich auch eine Luftzufuhr 28 befindet. An dem Unterteil 27 erkennt man noch Anpreßzylinder 29 zum Verschließen der Anlage, wobei der Materialbehälter 26 gegen das Filtergehäuse 25 gepreßt wird. Die bei der Luftzufuhr 28 zugeführte Luft gelangt über das Unterteil und einen Sieb- oder Anströmboden 30 in den Materialbehälter 26 sowie das Filtergehäuse 25. Bei entsprechendem Luftdurchsatz bildet sich in dem Materialbehälter und dem Filtergehäuse ein Wirbelbett aus dem im Behälter befindlichem, zu behandelnden Material.

Im oberen Bereich des Filtergehäuses 25 befinden sich strichliniert angedeutete Filter 31, auf deren Reingasseite sich eine

Abluftführung 32 befindet.

An dem Materialbehälter 26 ist ein Dichtverschluß angeordnet, der einen Trägerkörper 12 als Teil eines Sensorhalters aufweist.

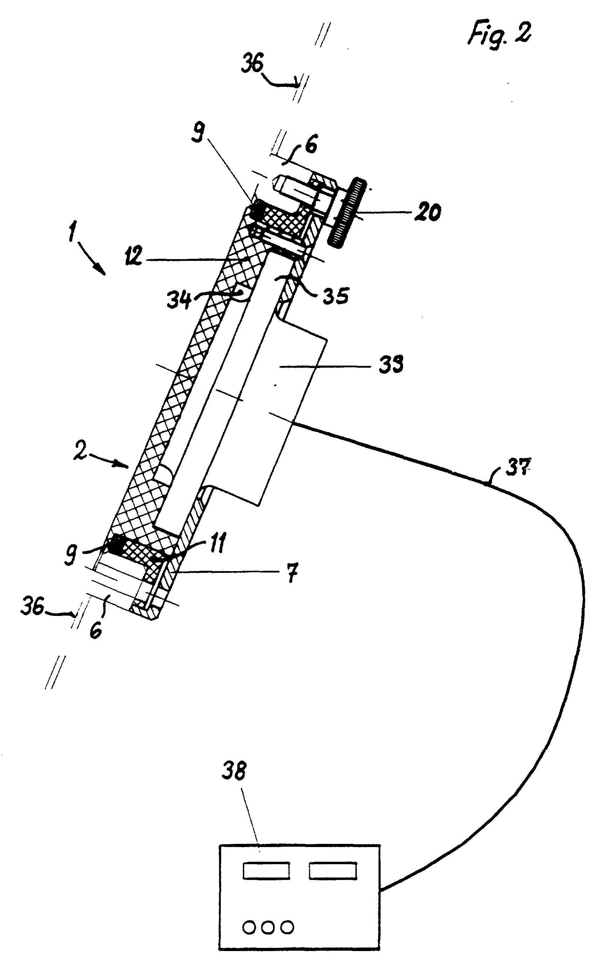

In dem Ausführungsbeispiel nach Fig. 2 ist der Trägerkörper 12 mit einem als Mikrowellensensor ausgebildeten Feuchtesensor 33 verbunden.

Im Ausführungsbeispiel gemäß Fig. 2 weist der Trägerkörper 12 des Dichtverschlusses 1 eine Aufnahmeöffnung 34 auf, in die der Feuchtesensor 33 von der Außenseite her eingesetzt ist.

Der Sensor weist einen Befestigungsflansch 35 auf, an dem er durch den lösbaren Deckflansch 7 gehalten ist.

Der Trägerkörper 12 bildet für den Sensor 33 eine Schutzkappe und ist zur Behälterinnenseite 36 hin dicht geschlossen. Gut zu erkennen ist in Fig. 2 auch, daß die Innenseite des Trägerkörpers etwa bündig mit der Behälterinnenseite 36, d.h. mit dieser im wesentlichen fluchtend abschließt. Die Behälterinnenwand ist dadurch praktisch kontinuierlich fortgeführt, ohne daß störende Teile ins Behälterinnere ragen. Bei dem Mikrowellen-Feuchtesensor 33 ist ein Temperatursensor angeordnet. Der oder die Sensoren sind über elektrische Kabel 37 mit einer Auswerteeinrichtung 38 verbunden, die Teil einer Prozeßsteuerung ist.

Mit dem Feuchtesensor können Granulations-, Agglomerations-, Pelletisierungs-, Instantisierungs-, Coating- und Trocknungsprozesse in einer Wirbelschicht oder in einem sogenannten Eintopfgranulator überwacht werden. Die Produktfeuchte stellt eine wichtige Prozeßgröße dar. Sie dient zur Überwachung beispielsweise der maximal zulässigen Produktfeuchte für ein Aufrechterhalten einer stabilen und homogenen Verwirbelung, oder einer geeigneten konstanten Feuchte für gleichmäßige Granulation oder als Maß für das Prozeßende beim Trocknen auf einen gewünschten Endfeuchtegehalt. Mit Hilfe des Mikrowellen-Feuchtesensors 33 ist eine Online-Produktfeuchtemessung möglich, durch die unter anderem eine höhere Sprührate und dadurch ein erhöhter Durchsatz möglich ist.

Ein geeigneter Sensor kann in Form eines Planarsensors mit einem PTFE-Abschluß ausgebildet sein, der sich wandbündig in der Behälterwand der Wirbelschichtapparatur in gleicher Weise wie ein Bullauge montieren läßt. Dies ermöglicht sehr einfach eine Nachrüstung bestehender Anlagen. Spezielle Probennahmevorrichtungen oder Abdeckungen sind nicht erforderlich. Der Sensor kann über Standardflansche wie sie auch für Bullaugen und Sprühdüsenhalterungen verwendet werden, leicht integriert werden. Daraus ergibt sich ein wesentlicher Vorteil des Sensors: Aufgrund der schwierigen Reinigbarkeit großer Wirbelschichtanlagen und der Tatsache, daß in der Pharmazie teilweise hochwirksame, gesundheitsgefährdende Substanzen verarbeitet werden ist es wichtig, die Anlagen inklusive deren gesamter Zusatzkomponenten möglichst vollständig automatisch und geschlossen zu reinigen (**C**leaning-**I**n-**P**lace, CIP-Reinigung). Die Anlage und die eingesetzten Komponenten müssen möglichst totraumfrei und leicht reinigbar sein. Aus diesem Grund scheiden sämtliche Sensoren, die direkt in das Wirbelbett gebracht werden müssen und die über Diffusion von Wasserdampf den Produktfeuchtegehalt bestimmen, aus. Der berührungslos messende Mikrowellensensor kann über ein spezielles Dichtsysteme mit der Behälterwand totraumfrei abgedichtet werden und kann durch die Abdeckung mit einer Teflonkappe ohne Ecken und Kanten ähnlich wie ein Bullauge vollständig gereinigt werden.

Bei der Messung der Produktgesamtfeuchte mittels elektromagnetischer Strahlung im Hochfrequenz- oder Mikrowellenbereich ist eine bestimmte Eindringtiefe der Strahlung in die Wirbelschicht vorhanden und in Abhängigkeit der Produktfeuchte stellt sich eine feuchteabhängige Resonanzfrequenz und eine entsprechende Dämpfung der Strahlung ein.

Die Feuchte wird über einen im Bereich der Hochfrequenz kleiner als 100 MHz oder auch im Mikrowellenbereich arbeitenden Sensor gemessen. Dadurch wird eine geeignete Eindringtiefe in die Wirbelschicht erreicht. Es wird die tatsächliche Feuchte eines Partikels auf der Partikeloberfläche und im Inneren des Partikels gemessen (wichtig für Granulationsprozesse). Das Meßsignal ist im wesentlichen nur vom Feuchtegehalt der Partikel und der Produkttemperatur abhängig. Es kann sich z.B. bei hohen Temperaturen und geringer Produktefeuchte eine höhere Dämpfung ergeben als bei der gleichen Produktfeuchte und einer niedrigeren Temperatur. Dieser Einfluß kann jedoch dadurch kompensiert werden, indem bei bei verschiedenen Temperaturen (z.B. 20 °C, 40 °C, 60 °C und 80 °C) eine Kalibrierkurve hinterlegt wird, auf die während der Messung in Abhängigkeit der gemessenen Produkttemperatur entsprechend zugegriffen wird. Dafür kann eine entsprechend Regelung entwickelt werden.

Andererseits kann beim Trocknen der Einfluß der Temperatur insofern vernachlässigt werden, daß lediglich eine 2-Punkteichung durchgeführt wird (charakterisiert Ausgangsfeuchte und gewünschte Endfeuchte), so daß das am Ende gemessene Signal unabhängig von der Temperatur immer den gewünschten Endwert detektiert. Beim Granulation ist dagegen mit einer nahezu konstanten Temperatur (Kühlgrenztemperatur) zu rechnen. Der Temperatureinfluß kann dadurch vernachlässigt werden und es wird dadurch eine Eichung mit mehreren Punkten möglich, z.B. mit fünf Referenzpunkten.

Ein direkter Einfluß der Korngrößen in dem für Wirbelschichtprozesse typischen Bereich von 0,2 mm bis 20 mm ist nicht zu erwarten. Jedoch führt eine unterschiedliche Korngröße oder eine unterschiedliche Verteilung derselben zu einer veränderten Schüttdichte in der Wirbelschicht, welche einen Einfluß auf das Meßsignal hat. Der Einfluß einer unterschiedlichen Dichte kann jedoch im Rahmen einer geeigneten Kalibrierung und durch gleichzeitiges Erfassen der Resonanzfrequenz und der Dämpfung kompensiert werden.

Die Resonanzfrequenz bezieht sich auf die gesamte Wirbelschicht bzw. auf Teile derselben und nicht auf ein einzelnes Partikel. Aufgrund der guten Durchmischung in einer Wirbelschicht ist dieser Summenparameter repräsentativ für die Produktfeuchte. Ein bestimmter Schichtaufbau (typisch für Wirbelschichten) auf dem Sensor kann aufgrund der Eindringtiefe der Strahlung in bestimmten Grenzen toleriert werden. Dies stellt einen wesentlichen Unterschied zu den anderen Verfahren dar.

Durch die Eindringtiefe der elektromagnetischen Strahlung in das Produkt kann zwischen einer "feuchten Granulation" und einer "trockenen Granulation" während des Prozesses unterschieden werden.

Zum Kalibrieren eines mit elektromagnetischen Wellen arbeitenden Meßfühlers ist prinzipiell eine 2-Punkt- oder Mehrpunkt, zum Beispiel 5-Punkt-Eichung möglich. Kalibriert wird direkt in der Prozeßanlage mit realem Produkt und realistischen Prozeßbedingungen, wobei diese müssen noch nicht optimiert sein müssen. Es wird eine Meßkurve während des Prozesses aufgenommen und gegen eine genaue offline-Referenz (z.B. Trockengewichtsbestimmung über Waage) abgeglichen. Somit ergibt sich eine Korrelation zwischen elektronischen Meßsignal und der offline gemessenen Produktfeuchte. Die während des tatsächlichen Prozesses dann online gemessenen Produktfeuchten ergeben sich aufgrund dieser Kalibrierkurve.

Beim Scale-up kann man sich jeweils an der bereits ermittelten Kalibrierkurve orientieren und diese in einem ersten Kalibrierprozeß überprüfen und gegebenfalls neu hinterlegen. Ein zusätzlicher Kalibrier- oder statistischer Interpretationsaufwand ist nicht erforderlich.

Kurz zusammengefaßt ergeben sich folgende wesentlichen Vorteile des Verfahrens:
höhere Sprührate und dadurch erhöhter Durchsatz Prozeß übertragbar nahezu unabhängig von der Zuluftbedingungen (gut geeignet für Scale-up)
ideale Übertragung ermittelter Laborprozesses auf eine Prozeßanlagen
gute Reinigbarkeit bei CIP-Prozessen

## Patentansprüche

1. Verfahren zum Überwachen und/oder Steuern und Regeln eines Granulations-, Agglomerations-, Instantisierungs-, Coating- und Trocknungsprozesses in einer Wirbelschicht oder einer bewegten Schüttung durch Bestimmung der Produktfeuchte, **dadurch gekennzeichnet, daß** zumindest während eines Prozeßabschnittes die Produktgesamtfeuchte weitgehend kontinuierlich zumindest im Sekundenbereich berührungslos mittels elektromagnetischer Strahlung im Hochfrequenz- oder Mikrowellenbereich durch Auswertung der Dämpfung als Maß für diese Produktgesamtfeuchte gemessen und unter Berücksichtigung der Produkttemperatur über einen Regelkreis durch Verändern der Sprührate und/oder der Gastemperatur und/oder des Volumenstromes in einem vorgebbaren Bereich gehalten wird.

2. Verfahren nach Anspruch 1, **dadurch gekennzeichnet, daß** über die Messung der Produktgesamtfeuchte bei einem Granulierungs-/Coating-Prozeß die maximal zulässige Produktfeuchte für das Aufrechterhalten einer stabilen und homogenen Verwirbelung, und/oder eine vorgebbare, konstante Produktgesamtfeuchte geregelt und/oder der Granulationsendpunkt bestimmt wird.

3. Verfahren nach Anspruch 1, **dadurch gekennzeichnet, daß** über die Messung der Produktgesamtfeuchte bei einem Trocknungsprozeß das Prozeßende beim Trocknen auf einen gewünschten Endfeuchtegehalt bestimmt wird.

4. Verfahren nach einem der Ansprüche 1 bis 3, **dadurch gekennzeichnet, daß** über die Messung der Produktgesamtfeuchte bei einem Granulierungsprozeß eine mit der Produktgesamtfeuchte etwa korrelierende, reproduzierbare Korngrößenverteilung durch Verändern der Sprührate und/oder der Gastemperatur und/oder des Volumenstromes in einem vorgebbaren Bereich gehalten wird.

5. Verfahren nach einem der Ansprüche 1 bis 4, **dadurch gekennzeichnet, daß** über die Messung der Produktgesamtfeuchte ein vorbestimmbarer Feuchteverlauf über eine direkte Korrelation von Sprührate und Produktfeuchte geregelt wird.

6. Verfahren nach einem der Ansprüche 1 bis 5, **dadurch gekennzeichnet, daß** bei einer Kalibrierung im Rahmen eines im Labormaßstab eingestellten Prozesses und darauf basierender Anpassung des Verfahrens auf einen tatsächlichen Produktionsmaßstab, die Einstellung der Sprührate unter Zuhilfenahme von Meßwerten der Produktgesamtfeuchte als apparateunabhängige Größe erfolgt.

7. Lufttechnischer Apparat, insbesondere Wirbelschichtapparatur, mit einem Behälter und einem Dichtverschluß (1), der ein in eine Behälterwand-Öffnung einsetzbares Verschlußteil (2) aufweist, wobei zur Prozeßsteuerung ein Regelkreis zumindest mit einem Temperatursensor sowie Mitteln zur Änderung der Sprührate und/oder der Gastemperatur und/oder des Volumenstromes vorgesehen ist, zur Durchführung des Verfahrens nach einem der Ansprüche 1 bis 6, **dadurch gekennzeichnet, daß** in den Dichtverschluß ein Mikrowellensensor als Feuchtesensor (33) integriert ist, der über elektrische Kabel (37) mit einer Auswerteeinrichtung (38) als Teil der Prozeßsteuerung verbunden ist, daß der Dichtverschluß (1) einen durch einen Trägerkörper (12) gebildeten Sensorhalter aufweist und daß der Trägerkörper (12) oder der Feuchtesensor für einen totraumfreien Abschluß zu der Behälterwand etwa Innenwandbündig angeordnet ist.

8. Lufttechnischer Apparat nach Anspruch 7, **dadurch gekennzeichnet, daß** der Trägerkörper (12) eine Höhlung (34) zur Aufnahme des Mikrowellensensor (33) aufweist und vorzugsweise als mit der Behälter-Innenwand etwa bündig abschließende Schutzkappe für den Sensor ausgebildet ist, die vorzugsweise aus Polytetrafluoräthylen (PTFE) besteht.

9. Lufttechnischer Apparat nach Anspruch 7 oder 8, **dadurch gekennzeichnet, daß** ein lösbarer Deckflansch (7) zum lösbaren Halten des Mikrowellensensors (33) vorgesehen ist.

10. Lufttechnischer Apparat nach einem der Ansprüche 8 bis 9, **dadurch gekennzeichnet,daß** der Mikrowellensensor (33), bezogen auf eine vorgegebene Ruhebett-Schütthöhe des jeweiligen Produktes innerhalb des Behälters (25,26), in einer Höhe von etwa bis zum Zweifachen der Ruhebett-Schütthöhe, vorzugsweise am oberen Randbereich des Ruhebettes innerhalb von dessen Ruhebett-Schütthöhe, angeordnet ist.

## Claims

1. Process for monitoring and/or controlling and regulating a granulation, agglomeration, instantisation, coating and drying process in a fluidised bed or a moving load by determining the moisture content of the product, **characterised in that** the total moisture content of the product is measured substantially continuously during at least one section of the process, at least for some seconds, in contact-free manner, by electromagnetic radiation in the high frequency or microwave range, by evaluating the attenuation as a measurement of this total product moisture content, and is maintained within a predetermined range taking account of the product temperature via a regulating circuit by varying the spray rate and/or the gas temperature and/or the volumetric flow.

2. Process according to claim 1, **characterised in that** by measuring the total product moisture content in a granulation/coating process, the maximum permitted product moisture content for maintaining stable and homogeneous fluidisation and/or a predetermined constant total product moisture content is regulated and/or the end point of granulation is determined.

3. Process according to claim 1, **characterised in that** by measuring the total product moisture content in a drying process the end of the process is determined when the drying produces a desired final moisture content.

4. Process according to one of claims 1 to 3, **characterised in that**, by measuring the total product moisture content in a granulation process, a reproducible particle size distribution correlating approximately with the total product moisture content is maintained within a predetermined range by varying the spray rate and/or the gas temperature and/or the volumetric flow.

5. Process according to one of claims 1 to 4, **characterised in that**, by measuring the total product moisture content, predetermined moisture characteristics are regulated by direct correlation of the spray rate and product moisture content.

6. Process according to one of claims 1 to 5, **characterised in that**, by calibrating within the scope of a process set up on a laboratory scale and adapting the process based thereon to an actual production scale, the spray rate is adjusted with the aid of measurements of the total product moisture content as a parameter independent of the apparatus.

7. Industrial air equipment, particularly fluidised bed apparatus, having a container and a sealing closure (1) which comprises a closure member (2) adapted to be inserted in an opening in the container wall, wherein for process control a regulating circuit is provided having at least a temperature sensor and means for varying the spray rate and/or the gas temperature and/or the volumetric flow, for carrying out the process according to one of claims 1 to 6, **characterised in that** integrated in the sealing closure is a microwave sensor as moisture sensor (33), which is connected via electric cables (37) to evaluating means (38) as part of the process control, in that the sealing closure (1) has a sensor holder formed by a carrier body (12) and in that the carrier body (12) or the moisture sensor is arranged substantially flush with the inner wall to meet the container wall with no dead space.

8. Industrial air equipment according to claim 7, **characterised in that** the carrier body (12) has a recess (34) for accommodating the microwave sensor (33) and is preferably constructed as a protective cap, preferably made of polytetrafluoroethylene (PTFE), for the sensor, ending substantially flush with the inner wall of the container.

9. Industrial air equipment according to claim 7 or 8, **characterised in that** a releasable covering flange (7) is provided for releasably holding the microwave sensor (33) .

10. Industrial air equipment according to one of claims 8 and 9, **characterised in that** the microwave sensor (33) is arranged, relative to a given bulk height of the product in a stationary bed inside the container (25, 26), at a height of up to about twice the bulk height of the stationary bed, preferably at the upper edge region of the stationary bed within the bulk height thereof.

## Revendications

1. Procédé pour contrôler et/ou commander et réguler un processus de granulation, d'agglomération, d'instantanéisation, de revêtement et de séchage dans une couche fluidisée ou dans un lit fluidisé par détermination de l'humidité du produit, **caractérisé en ce qu'**au moins pendant un segment du processus, l'humidité totale du produit est mesurée largement en continu, au moins dans la gamme des secondes, et sans contact au moyen d'un rayonnement électromagnétique dans la gamme des hautes fréquences ou des micro-ondes, par analyse de l'affaiblissement en tant que mesure de cette humidité totale du produit, et maintenue dans une gamme prédéfinie, en tenant compte de la température du produit, par le biais d'un circuit de régulation, par modification de la vitesse de pulvérisation et/ou de la température du gaz et/ou de l'écoulement volumétrique.

2. Procédé selon la revendication 1, **caractérisé en ce que** l'on régule, par la mesure de l'humidité totale du produit lors d'un processus de granulation / revêtement, l'humidité maximale autorisée du produit pour le maintien d'un tourbillonnement stable et homogène, et/ou une humidité totale du produit constante et prédéfinie, et/ou en ce que l'on détermine le point final de granulation.

3. Procédé selon la revendication 1, **caractérisé en ce que**, par la mesure de l'humidité totale du produit lors d'un processus de séchage, on détermine la fin du processus de séchage sur une teneur en humidité finale souhaitée.

4. Procédé selon l'une des revendications 1 à 3, **caractérisé en ce que**, par la mesure de l'humidité totale du produit, lors d'un processus de granulation, on maintient dans une gamme prédéterminée une répartition granulométrique reproductible, approximativement en corrélation avec l'humidité totale du produit, par modification de la vitesse de pulvérisation et/ou de la température du gaz et/ou de l'écoulement volumétrique.

5. Procédé selon l'une des revendications 1 à 4, **caractérisé en ce que**, par la mesure de l'humidité totale du produit, on régule une évolution de l'humidité pouvant être prédéterminée par une corrélation directe entre vitesse de pulvérisation et humidité du produit.

6. Procédé selon l'une des revendications 1 à 5, **caractérisé en ce que**, lors d'un étalonnage dans le cadre d'un processus déterminé à l'échelle de laboratoire, et d'une adaptation, basée sur celui-ci, du processus à une échelle de production réelle, le réglage de la vitesse de pulvérisation se produit au moyen des valeurs mesurées de l'humidité totale du produit en tant que grandeur indépendante de l'appareil.

7. Appareil aéraulique, en particulier appareil à couche fluidisée, comportant un réservoir et une fermeture étanche (1), qui présente un élément de fermeture (2) insérable dans une ouverture de la paroi du réservoir, dans lequel est prévu, pour la commande de processus, un circuit de régulation comportant au moins un capteur de température et des moyens de modification de la vitesse de pulvérisation eVou de la température du gaz et/ou de l'écoulement volumétrique, afin de réaliser le procédé selon l'une des revendications 1 à 6, **caractérisé en ce qu'**est intégré dans la fermeture étanche un capteur micro-ondes en tant que capteur d'humidité (33), lequel est relié par des câbles électriques (37) à un dispositif d'interprétation (38) en tant qu'élément de la commande de processus, en ce que la fermeture étanche (1) présente un support de capteur formé par un corps de support (12), et en ce que le corps de support (12) ou le capteur d'humidité est disposé, pour une fermeture exempte d'espace nuisible, contre la paroi du réservoir de façon approximativement affleurante à la paroi intérieure.

8. Appareil aéraulique selon la revendication 7, **caractérisé en ce que** le corps de support (12) présente un creux (34) destiné à loger le capteur micro-ondes (33) et est de préférence conçu en tant que capot de protection du capteur, fermant d'une façon approximativement affleurante à la paroi intérieure du réservoir, et qui se compose de préférence de polytétrafluoroéthylène (PTFE).

9. Appareil aéraulique selon la revendication 7 ou 8, **caractérisé en ce qu'**est prévue une bride de recouvrement amovible (7) permettant de maintenir de façon amovible le capteur micro-ondes (33).

10. Appareil aéraulique selon l'une des revendications 8 à 9, **caractérisé en ce que** le capteur micro-ondes (33), sur la base d'une hauteur de déversement en lit fixe prédéfinie du produit respectif dans le réservoir (25, 26), est disposé à une hauteur allant jusqu'à environ deux fois la hauteur de déversement en lit fixe, de préférence au niveau de la zone de bordure supérieure du lit fixe à l'intérieur de cette hauteur de déversement en lit fixe.
